# EUROPEAN PATENT SPECIFICATION

(11) **EP 2 387 339 B1**
(45) Date of publication and mention of the grant of the patent: **06.03.2013**
(21) Application number: 10700727.0
(22) Date of filing: 08.01.2010
(51) Int. Cl.: A47J 43/14

(54) **INJECTION ASSEMBLY AND MACHINE FOR PREPARING A DRINK PROVIDED WITH THIS INJECTION ASSEMBLY**
EINSPRITZANORDNUNG UND MIT DIESER EINSPRITZANORDNUNG VERSEHENES GETRÄNKEZUBEREITUNGSGERÄT
ENSEMBLE D'INJECTION ET MACHINE POUR PRÉPARER UNE BOISSON COMPORTANT CET ENSEMBLE D'INJECTION

(30) Priority: 13.01.2009 EP 09150463
(43) Date of publication of application: 23.11.2011
(73) Proprietor: Nestec S.A., 1800 Vevey (CH)
(72) Inventor: TALON, Christian, CH-1134 Vufflens-le-Château (CH); DENISART, Jean-Luc, CH-1096 Cully (CH); PLEISCH, HansPeter, CH-1802 Corseaux (CH); MEIER, Alain, CH-6837 Caneggio (CH)
(86) International application number: PCT/EP2010/050115
(87) International publication number: WO 2010/081762

(56) References cited:
- WO-A-2006/127118
- DE-A1- 10 334 526
- US-A1- 2006 283 331
- US-B1- 6 971 304

## Description

The present invention relates to an injection assembly of the type with which a machine for preparing a drink is equipped. It relates more particularly to an injection assembly designed to accommodate a portion of consumable ingredients, such as a ground mass, a soluble powder or a liquid concentrate, into which a liquid, preferably water, is injected, for the extraction, infusion or dissolution of a substance contained in the ingredients.

Such injection assemblies generally comprise an injection chamber in which the liquid is brought into contact with the consumable ingredients for preparing the drink. The injection chamber is usually formed from a lower part, intended to accommodate a portion of the consumable ingredients, whether or not this is packaged in a packet (capsule or filter paper), and from an upper part provided with a liquid inlet. Said lower and upper parts can move relative to each other so as to be able to open the injection chamber and place the portion of consumable ingredients therein or remove them therefrom. The injection assembly further includes a mechanism designed to open, close and clamp the injection chamber according to the various steps in the preparation of the drink.

Many mechanisms for actuating the injection chamber have been developed and commercialized. One of them, described in document US 5 531 152, is made up of a frame, formed from two columns rigidly mounted on a support, from a cam, mounted so as to rotate on the support, and from a cam follower mounted so as to move translationally along the columns. The cam and the cam follower cooperate via inclined surfaces, so that when the cam rotates on its support the cam follower slides, in an ascending the cam rotates on its support the cam follower slides, in an ascending movement, along the columns. The injection assembly further includes an injection chamber formed from an upper part, provided with a liquid inlet, fixedly mounted on the frame, and from a lower part, provided with a nozzle through which the drink flows. The lower part is free and designed to receive a coffee portion.

The operation of such an injection assembly is simple and effective. The lower part is placed on the cam follower, and the cam is rotated using a lever which is fastened thereto. The cam follower drives the lower part upwards and presses it firmly against the upper part. The injection chamber is thus sealingly closed thanks to the presence of a seal, and the liquid may be injected into the chamber formed by the two parts and in which a filtering packet containing the coffee is placed.

Despite the simplicity and the robustness of its design, such an injection assembly is not without drawbacks, in particular the amount of space it requires. Specifically, it should be noted that the arrangement of the injection assembly thus described does not allow the drink to flow out directly beneath the lower part. The nozzle, through which the drink is intended to flow, extends towards the front of the injection assembly, and a receptacle must be placed offset to the front relative to the injection assembly in order to collect the drink. A machine equipped with such an injection assembly thus greatly lacks compactness.

US 6971304 discloses a coffee making apparatus comprising a body, a cover, a T-shaped pipe and valve unit, a clamping unit resiliently secured to the cover, a rotation disc, a filter unit, a disc retainer threadedly secured to the cover, a housing fitted over the cover, and a knob rotatably fastening in the housing and the rotation disc. Placing a coffee bag in the filter unit, rotating the knob together with the rotation disc, and moving the clamping unit downward will press and fasten the coffee bag as hot water being supplied from the pipe and valve unit for mixing with the coffee bag. In the preparation process, steam accompanied hot water may flow back to a reservoir. Also, a distance between a cup of the filter unit and a base of the body is adapted to adjust by threadedly rotating the cup about a sleeve of the filter unit.

This document does not disclose nor suggests the possibility to adapt finely the movement strength for opening or closing the head.

The object of the present invention is to remedy this drawback, by providing an injection assembly having an injection chamber, formed from an upper part and a lower part, which injection chamber is actuated by a cam mechanism cooperating via inclined surfaces, said injection assembly allowing the drink to flow vertically from the lower part. More precisely, the present invention relates to an injection assembly for the preparation of a drink from consumable ingredients and a liquid, comprising a frame in which the following are mounted: an injection chamber, intended to accommodate a portion containing the ingredients, having a lower part and an upper part, at least one of said lower and upper parts being mounted so as to move, and a cam and a cam follower which are mounted so as to move rotationally and translationally respectively, these cooperating via inclined surfaces in order to close said injection chamber. According to the invention, the upper part is mounted so as to move translationally inside the frame and the cam and cam follower are joined to the upper part so as to be able to open and close said injection chamber. Thanks to this feature, the space located beneath the lower part is entirely free and designed for the insertion of a receptacle for collecting the drink. The injection assembly is simple, robust and much more compact.

According to another feature, the upper part of the injection chamber includes liquid injection means having a radial inlet for the liquid to arrive radially relative to said upper part. This feature makes it possible to mount the upper part so as to move translationally, it being actuated by a cam or a set of cams mounted directly above the upper part.

According to another feature of the invention, the injection assembly includes an adjustment piece for adjusting the clamping force of the injection chamber applied by the cam means. The adjustment piece is configured so as to control the clamping, which can be adjusted by pawl means or other equivalent means. Cam-based locking means allow easy insertion of a means for adjusting the effective clamping force, requiring no technical complexity. Thus, it is possible to check the clamping force during manufacture of the injection assembly. This allows, during mounting, for the dimensional variations of the assembled parts forming said assembly to be easily corrected, thereby obtaining products that are calibrated with the optimum clamping force.

In one particular embodiment of the invention, said lower part is formed from a capsule holder. The capsule holder may be removable, in the manner of a drawer sliding in a recess provided in the frame. One of the advantages is therefore that the lower part is kept as simple as possible so as to limit the overall size of the device but also to make it easier to eject capsules and to reload the machine.

According to one aspect of the invention, said inclined surfaces of the cam and cam follower have highly inclined first portions and slightly inclined second portions which angularly extend said first portions. Thus, closure takes place in the final part of the travel of the cam follower by a smaller axial displacement thereof and a larger rotational travel of the cam acting on the cam follower. This improves the clamping precision and correct sealing, and also makes it possible to accommodate the possible dimensional variations of the capsule that derive from the manufacture and/or from expansion of the plastics due to the heat transmitted by the injected liquid.

In a preferred embodiment, the injection means include at least one hollow needle for piercing a capsule and for injecting the liquid into the capsule. The hollow needle may be located off-centre with respect to the axis defining the direction of closure of the upper part. The mechanism according to the invention associated with such a piercing and injection method has the advantage of providing a high closure force that makes the piercing easier and achieves good sealing. In addition, it allows the needle to be placed off-centre with respect to the surface of the capsule because of the linearity of the descent of the upper part, and therefore allows the formation of a liquid jet in the capsule for better dissolving of soluble ingredients, such as milk powder or chocolate powder.

The present invention also relates to a machine for preparing a drink, provided with such an injection assembly.

It should be noted that, within the context of the invention, the term "drink" is understood to mean any type of liquid consumable preparation, including a culinary preparation, such as soups and sauces, or a nutritional preparation, such as baby milk, etc.

Other features and advantages of the present invention will become more clearly apparent from the following detailed description of an example of the construction of an injection assembly according to the invention and of a machine for preparing a drink equipped with such an injection assembly, this example being given only for purely illustrative and nonlimiting purposes, in conjunction with the appended drawing in which:
- Figure 1 is a view, slightly in perspective and in partial cross-section of a first embodiment of a machine for preparing a drink according to the invention;
- Figure 2 is a longitudinal sectional view of the machine of Figure 1;
- Figures 3 and 4 are side views of a second embodiment of a machine for preparing a drink according to the invention;
- Figure 5 shows an exploded view of the machine according to the first embodiment of the invention;
- Figures 6 and 7 illustrate the machine in the retracted position, as a top view and a perspective view respectively;
- Figures 8 and 9 illustrate the machine in the deployed position, as a top view and a perspective view respectively;
- Figures 10 to 12 show a first embodiment of the injection assembly, in an exploded view, in cross section in the up position and in cross section in the down position, respectively;
- Figure 13 shows a perspective view of two of the elements of this first embodiment of the injection assembly;
- Figure 14 is a top view of said first embodiment of the injection assembly and of its control;
- Figure 15 shows an exploded view of a second embodiment of the injection assembly;
- Figures 16 and 17 are side and top views, respectively, of a first element of this second embodiment of the injection assembly;
- Figures 18 and 19 are views, in perspective and in axial section respectively, of a second element of this second embodiment of the injection assembly; and
- Figures 20 and 21 illustrate a third embodiment of a machine according to the invention, as a sectional view and a perspective view respectively.

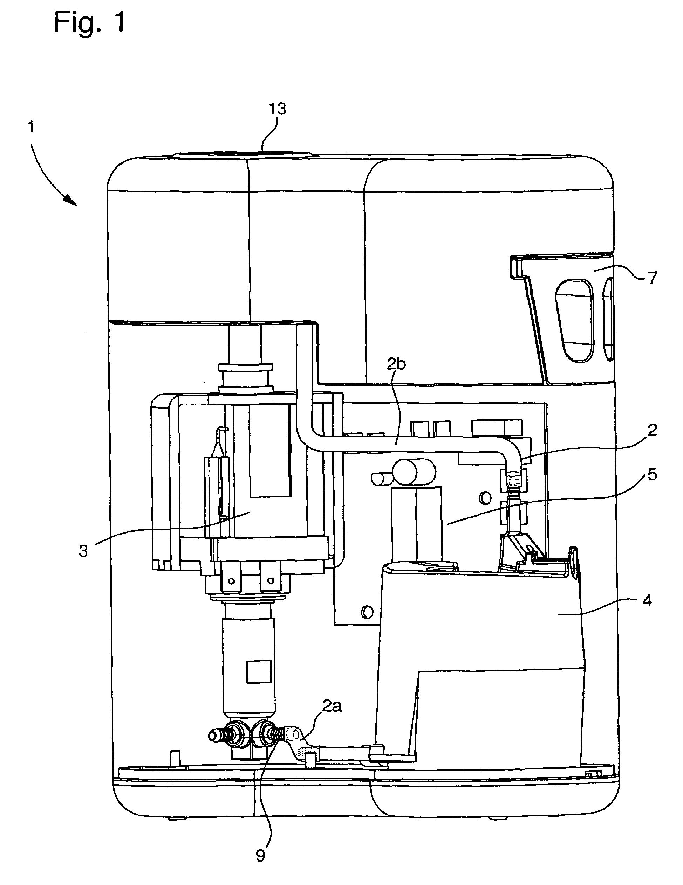

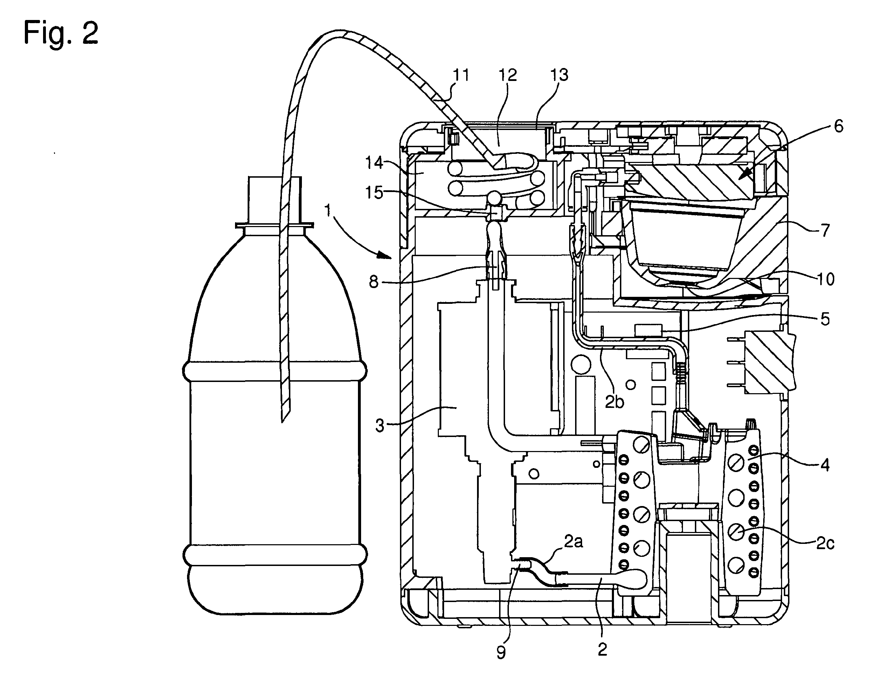

The machine for preparing a drink, shown in perspective and in longitudinal section in Figures 1 and 2 respectively, conventionally comprises a casing 1 defining an internal volume in which are housed a hose 2, intended for the circulation of a liquid, typically water, for preparing the drink, a pump 3 intended for delivering the liquid into the hose 2, a liquid heater 4, for example a block heater, in order to bring the liquid to the desired temperature, electronic control means 5, for controlling the pump 3 and the block heater 4, and an injection assembly 6, in which the liquid is injected into an injection chamber containing the ingredients for the purpose of extracting therefrom a substance for the preparation of the drink. Said substance is extracted, in the injection assembly 6 either by extraction, for example for preparing a coffee from a ground mass, or by infusion, for example for preparing tea or tisane from leaf fragments, or by dissolution, for example for preparing a drink based on coffee, milk and/or chocolate using soluble powders. In the embodiment shown, the injection assembly 6 has a support 7 designed to accommodate a removable capsule and mounted so as to slide in the manner of a drawer. This capsule support 7 may be configured to accommodate a capsule of the type described in documents EP 1 472 156 and EP 1 688 072. As a variant, the support 7 may be configured to accommodate a filter sachet or any other type of flexible or rigid package. It may also be designed for directly accommodating an unpackaged portion of a ground mass, soluble substance or liquid concentrate.

In the embodiment illustrated, the hose 2 has a rigid central portion 2c formed from a metal pipe, for example made of copper, integrated into the block heater, and two flexible portions 2a and 2b on either side of the rigid portion 2c of the block heater, for example formed from silicone pipes. The pipe portions are connected via rigid couplers, mounted for example on the block heater. Of course, other in-line heating means may be provided as an alternative, such as a cartridge heater or a tube heater. The pump 3 has an intake coupler 8 and a delivery coupler 9 to which the hose portion 2a is connected. The hose portion 2b is connected to the injection assembly 6, while the central portion 2c passes through the block heater 4 for raising the temperature of the liquid. The injection assembly 6 includes, by means of the capsule support 7, a passage 10 through which the prepared drink can flow.

According to one possible aspect of the invention, the machine for preparing a drink does not include a liquid reservoir, rather liquid intake means, for bringing liquid from outside the casing (from an external source) into the latter, which means can be at least partially deployed to the outside of the casing. The liquid intake means are formed, in a first embodiment illustrated in figure 2, by a flexible intake hose 11, housed in the internal volume of the casing 1 and connected via a first end to the intake coupler 8 of the pump 3. The hose 11 can be deployed from inside the casing 1 to the outside through an orifice 12 made in the casing 1, so that a second end is dipped into a liquid contained in a reservoir external to the machine. Said reservoir may be a flask, bottle or any other container provided with an opening. The orifice 12 is closed off by a removable cover 13.

The arrangement according to one possible aspect thus described makes it possible to reduce the internal volume of the casing 1, because of the absence of a liquid reservoir and a reservoir support permanently placed in and associated with the casing. The machine for preparing a drink according to the invention thus is more compact and is lighter than a machine according to the prior art. Thanks to these characterizing features and to the deployable hose 11 housed in the casing 1, the machine according to the invention can be easily transported and is easy to stow. Its operation is similar to the operation of a conventional machine, except that the liquid is taken in by the pump 3 from an external reservoir independent of the machine using a deployable hose 11.

In one possible alternative embodiment, the machine according to the invention could also include a small reservoir (having a maximum capacity of 250 ml), which may or may not be removable.

In the embodiment shown in Figure 2, the casing 1 includes a compartment 14, located close to the pump 3, for example above it, in which the flexible intake hose 11 is housed. The compartment 14 is provided with an internal opening 15 for the passage and connection of the intake hose 11 to the pump 3. In a variant (not shown), the flexible intake hose 11 is entirely housed in a compartment not located close to the pump 3. It is completely extracted from said compartment and then connected temporarily to the pump 3, via a first end, for the time needed to prepare a drink. In one or other variant, the hose 11 is integrated into the casing, thereby creating a compact stand-alone machine.

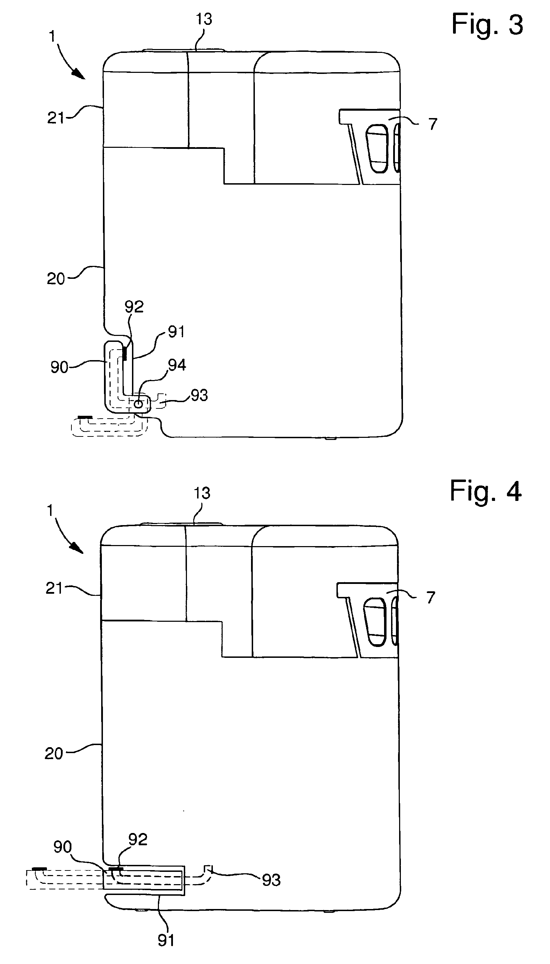

In a second embodiment of the machine, illustrated in Figures 3 and 4, the liquid intake means, for bringing liquid from outside the casing 1 into the latter, are formed by an intake hose which includes a rigid portion 90. The rigid portion 90 is mounted so as to be articulated on or slide in a housing 91 external to the casing 1, between a retracted position and a protruding position. For this purpose, the casing 1 includes an external housing 91 designed to accommodate said rigid portion 90 in the retracted position. The rigid portion 90 is provided with a connector 92 for connecting a removable liquid reservoir. The intake hose further includes a second, rigid or flexible, portion 93 housed inside the casing 1 and connected via a first end to the rigid portion 90 and via a second end to the pump 3. As previously, the machine thus described is compact and stand-alone.

In the embodiment shown in Figure 3, the rigid portion is articulated so as to rotate on the base of the body 20 about a rotation axis 94 between a retracted position, in which it is in an open housing 91, and a deployed position, in which the portion extends horizontally and the connector 92 is turned upwards so as to receive a removable reservoir (not shown).

In the embodiment shown in Figure 4, the support is mounted so as to slide in the housing 91. It can therefore move horizontally from a retracted position to a deployed position.

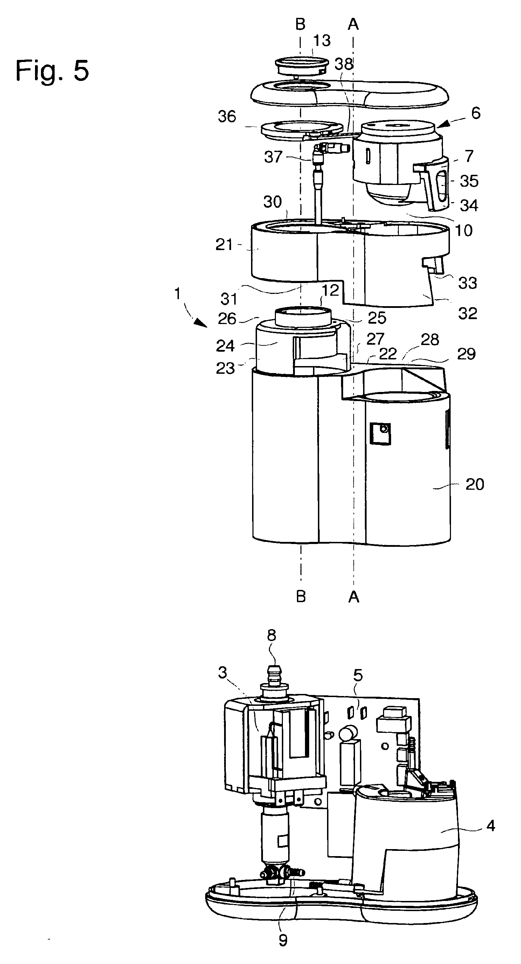

The construction of the machine according to the invention will be described in greater detail with regard to Figure 5, and with reference to the central longitudinal axis A-A of the casing 1.

The casing 1 is formed by a body 20, in which the pump 3 provided with the couplers 8 and 9, the hose 2, the block heater 4 and the electronic control means 5 are mounted, and by a head 21 in which the injection assembly 6 provided with the passage 10 is mounted. The body 20 and the head 21 are for example made of an injection-moulded or thermoformed plastic or made of a metal such as aluminium.

The head 21 is mounted so as to pivot on the body 20 about a longitudinal axis B-B transversely offset relative to the axis A-A, between a retracted, stowed position and a deployed, service position. For this purpose, the body 20 has an upper face 22 surmounted by a male cylindrical portion 23 of axis B-B, the external face 24 of which forms a guide surface for the head 21. The cylindrical portion 23 is provided with a shoulder 25 forming a support surface 26 for the head 21. It also includes a cut-away 27 intended for the hose 2 to pass through to the injection assembly 6. The upper face 22 also has a projection 28 forming an abutment surface 29 that defines the limit of said retracted position.

The head 21 has a female cylindrical portion 30 of axis B-B, matched to the diameter and height of the male cylindrical portion 23 of the body. It also includes a lower face 31 provided with a projecting portion 32, matched to the shape and size of the projection 28 and intended to come into contact with the abutment 29 when the head is in the retracted position. The head 21 also includes a housing 33 into which is inserted the removable capsule support 7 forming part of the injection assembly 6. The capsule support 7 has, for this purpose, lateral guiding means for being inserted into the housing 33 and an outer face 34 matched to the shape and dimensions of the housing 33 so as to be inserted into the head 21. The outer face 34 is provided with two openings 35 intended for taking hold of the capsule support 7.

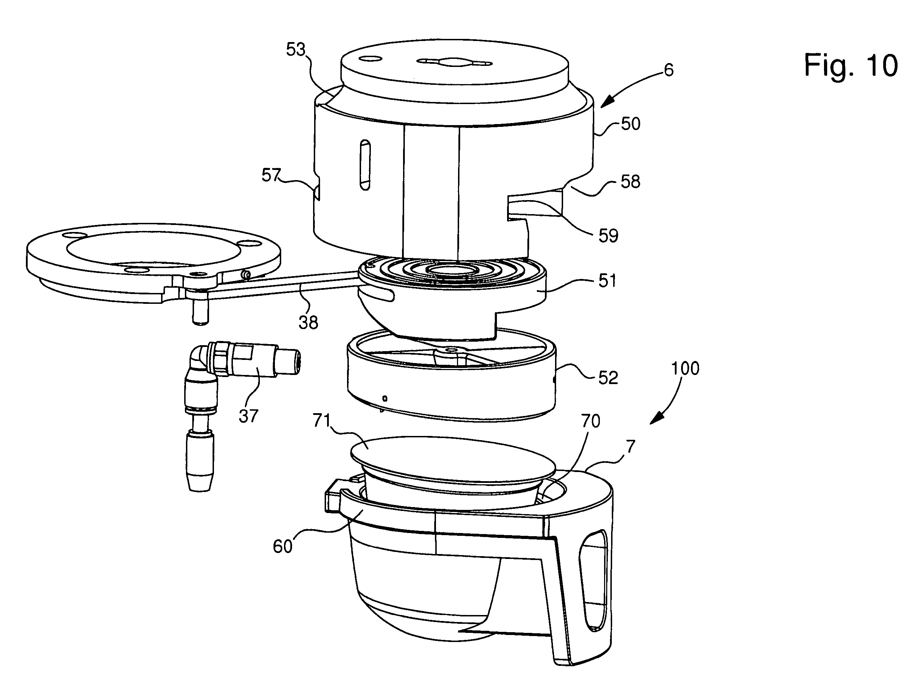

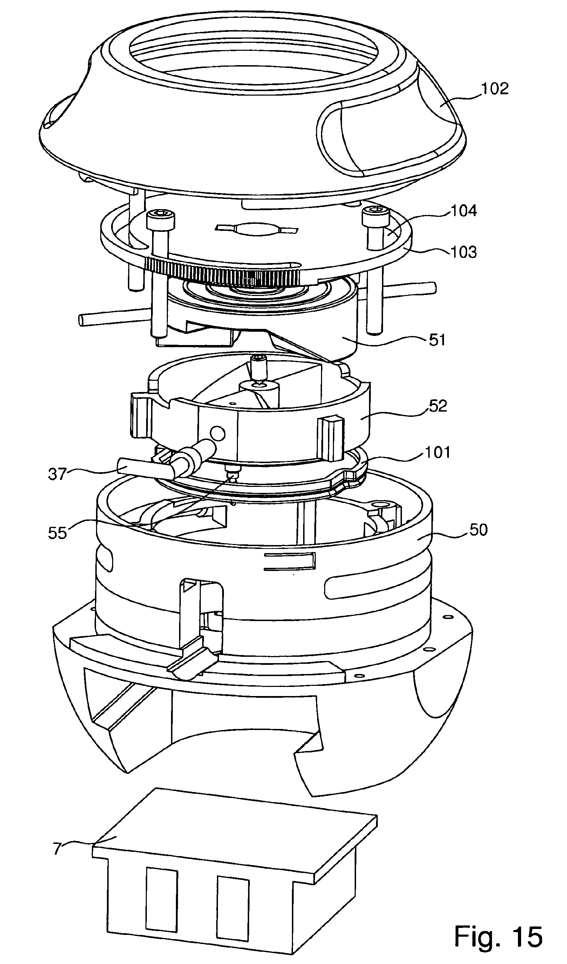

The female cylindrical portion 30 is mounted so as to rotate freely on the male cylindrical portion 23 and prevent said female cylindrical portion from moving translationally by a ring 36 fixed to the support surface 26. The head 21 is thus free to pivot on the body 20. The hose 2 passes from the body 20 to the head 21 via the cut-away 27. It is connected via its second end to a coupler 37 which is itself mounted on the injection assembly 6. The hose portion 2b is advantageously flexible, so as to follow the movement of the head 21 when the latter pivots on the body 20. In a first embodiment of the injection assembly 6, a lever 38 is mounted so as to be articulated via a first end on the ring 36 and via a second end on the injection assembly 6 that it controls. The construction and the operation of this first embodiment of the injection assembly 6 and of its control will be described in greater detail with regard to Figures 10 to 14. In a second embodiment of the injection assembly 6, the lever 38 does not exist. The construction and the operation of this second embodiment will be explained in detail with regard to Figures 15 to 19.

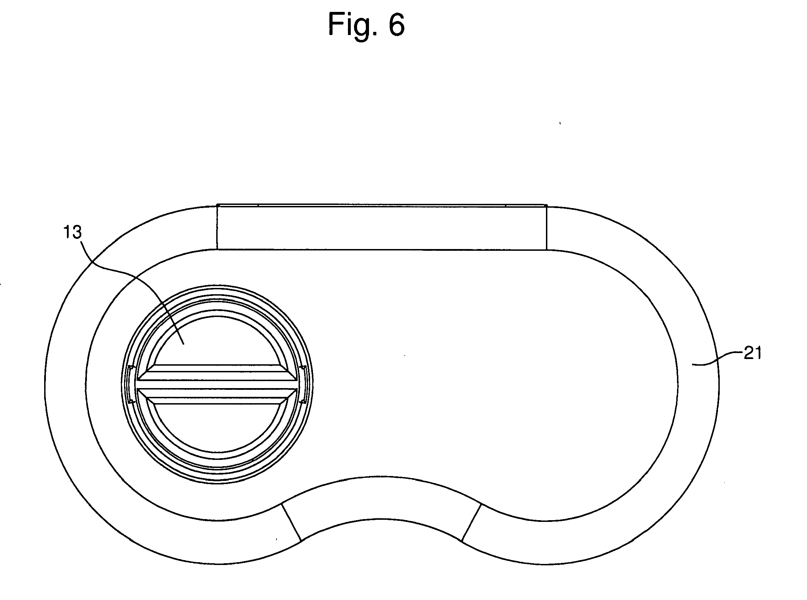

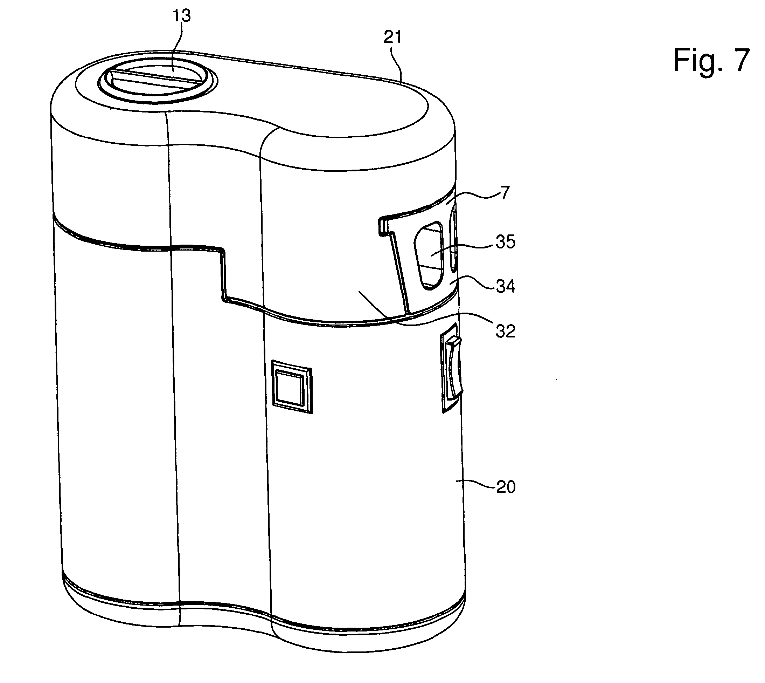

The machine in the retracted position is shown as a top view and as a perspective view in Figures 6 and 7 respectively. In this retracted position, the projecting portion 32 comes into contact with the abutment surface 29. The head 21 and the body 20 are aligned so as to form a compact block taking up a minimum amount of space. The capsule support 7 is inserted into the head 21. In the retracted position, the capsule support may be removed and then repositioned at any time in order to place or withdraw a capsule because of the distance from the actual injection means, as will be explained later. The passage 10 through which the drink is intended to flow is covered, since it is located directly above the body 20. The machine may thus be stowed in a small space, such as in a case so as to be easily transported. The machine may also be used in a small kitchen space and stowed more easily in a cupboard.

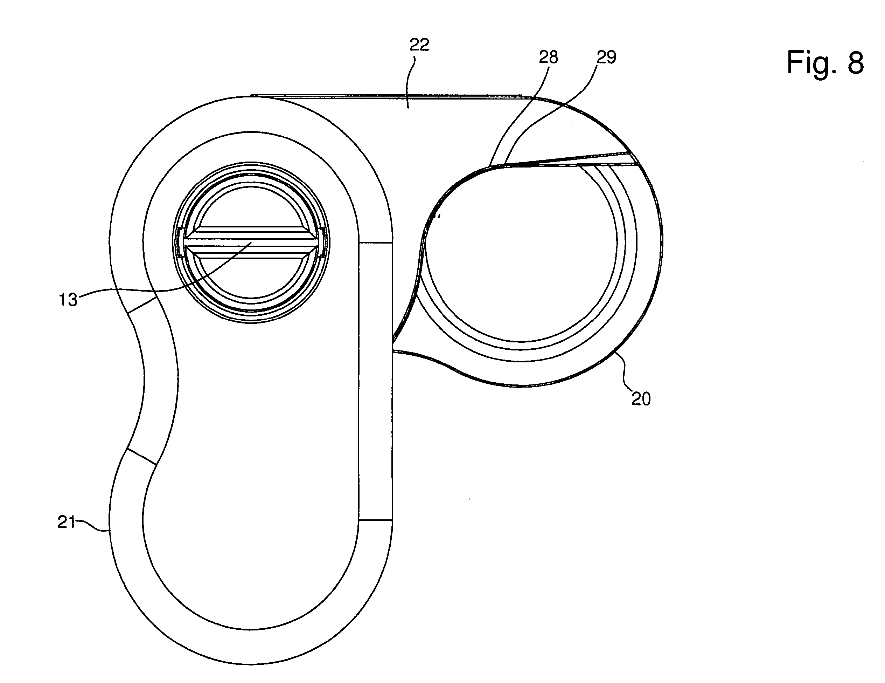

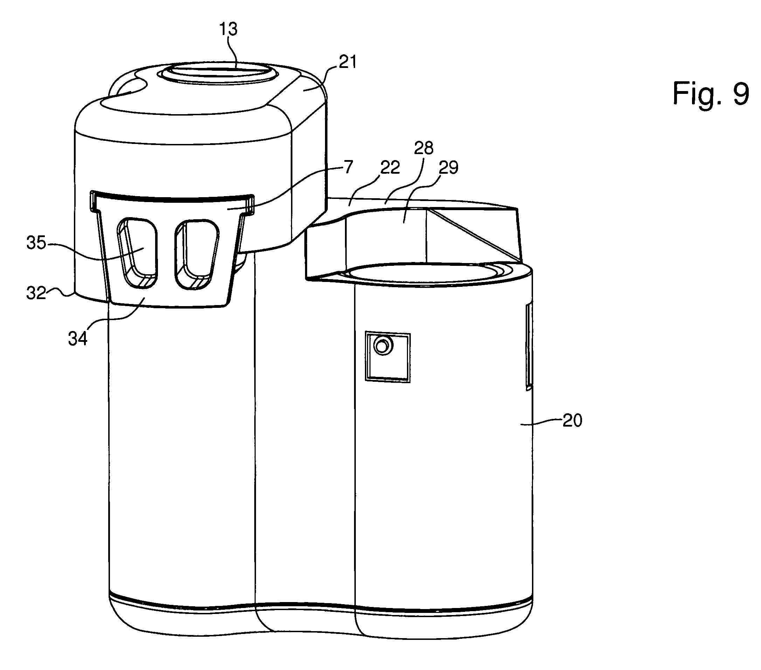

The machine in the deployed position is shown as a top view and a perspective view in Figures 8 and 9 respectively. The extent to which the head is deployed is determined by the construction of the injection assembly 6, which will be described in greater detail with regard to Figures 10 to 14. In the deployed position, the capsule support 7 is inserted into the head 21 and locked so as not to be able to be removed during preparation of the drink. The head 21 is partly disengaged from the body 20 so as to expose the passage 10 through which the drink is intended to flow. A container, such as a flask, may be placed in the free space located beneath the passage 10, for the purpose of collecting the drink.

Reference will now be made to Figures 10, 11 and 12 which show a first embodiment of the injection assembly 6 in an exploded view, in a sectional view in the up position and a sectional view in the down position, respectively. The injection assembly 6 is formed by a frame 50 in which a cam means is mounted. More precisely, mounted in the generally cylindrical frame 50 are, in succession, a rotatable cam 51, a cam follower 52 which can move in axial translation between an up position and a down position, and the sliding capsule holder 7. The cam follower 52 forms, with the capsule holder 7, the upper part and the lower part, respectively, of an injection chamber 100 in which the liquid comes into contact with a consumable product for making a drink. The injection chamber may be bounded by a capsule 71 containing the ingredients, not forming part of the device as such but being positioned between the upper part and the lower part.

The lever 38 is mounted articulatedly via a second end on the cam 51 through a first slot 53 extending angularly in the frame 50. The cam follower 52 has a lower face 54 covered for example with a layer of an elastic sealing material, such as for example rubber, intended to come into contact with the injection surface of the capsule. The cam follower is provided with a hollow needle 55, intended for piercing the capsule and for injecting liquid thereinto, and communicating with a radial blind hole 56. The coupler 37 is sealingly mounted in the blind hole 56 through a second slot 57 made longitudinally in the frame 50. Thanks to the radial blind hole 56 and the coupler 37, the arrival of liquid takes place radially relative to the cam follower 52, thereby enabling the cam 51 to be superposed. The cam follower 52 is kept in the up position by a return spring (not shown). Finally, the frame 50 has an axial housing 58 for inserting the capsule support 7, and an internal groove 59 open onto the housing 58. The capsule support 7 is provided with a rim 60 intended to slide in the groove 59 and with a circular shoulder 70 forming a bearing surface for a capsule 71.

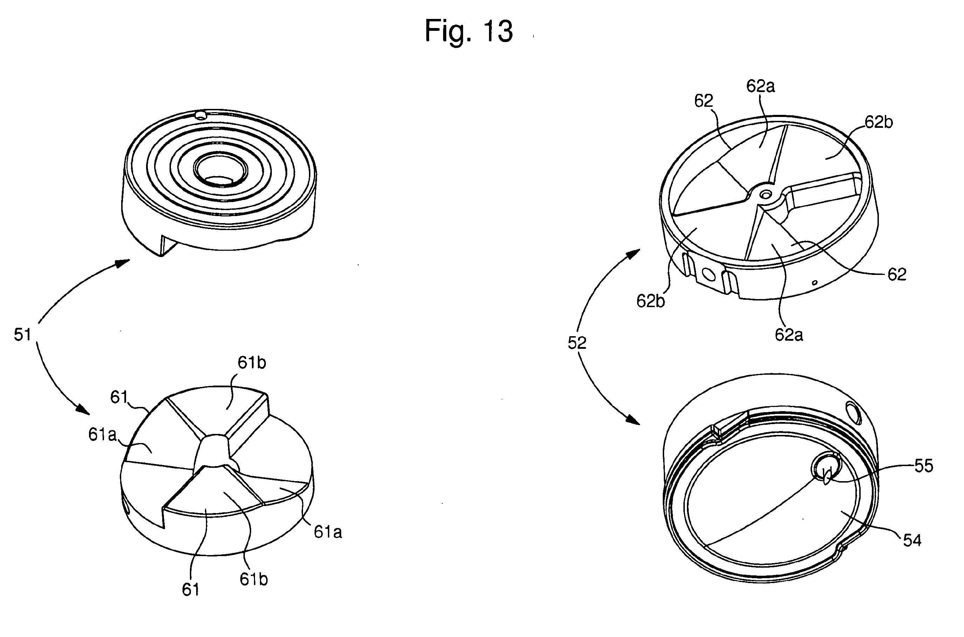

The cam 51 and the cam follower 52 are shown in perspective in Figure 13. They cooperate through two sets of inclined surfaces, referenced 61 and 62 respectively, designed so that the cam 51 makes the cam follower 52 move translationally when it is subjected to a rotational movement. This type of construction and movement is known to those skilled in the art. It should be noted that the surfaces 61 and 62 have highly inclined first portions, 61a and 62a respectively, and slightly inclined second portions, 61b and 62b respectively, which extend angularly from the first portions 61 a, 62a.

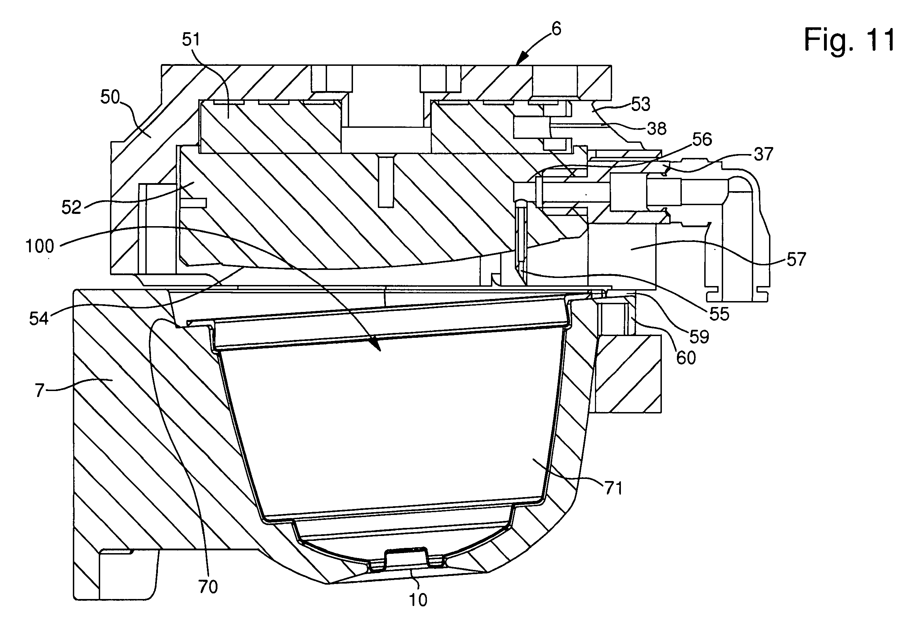

In the up position, as shown in figure 11, the relative orientation of the cam 51 and the cam follower 52 is chosen so that the surfaces 61 a and 62a are in contact with each other, without cooperating. The return spring presses the cam follower 52 against the cam 51 leaving the cut-away 33 free for introducing or withdrawing the capsule holder 7. In the.position thus described, the injection chamber 100 is open.

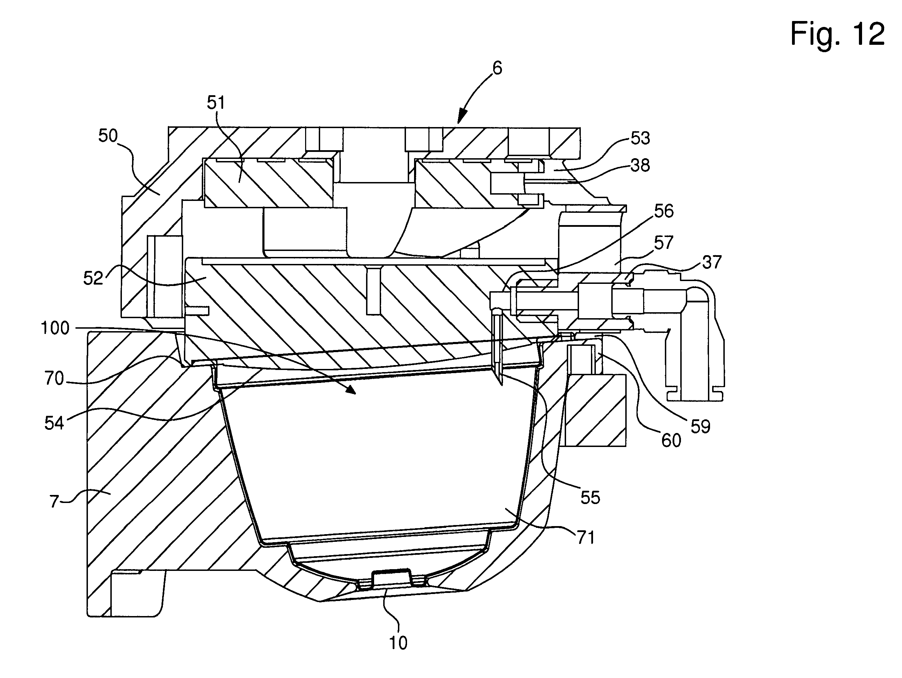

When the cam 51 rotates, the surfaces 61 a and 62a cooperate and the cam follower 52 moves towards the capsule support 7. The geometries of the inclined surfaces 61 and 62 are chosen so that at the end of the first portions 61 a, 62a, the cam follower 52 comes into contact, via its lower face 54, with the capsule 71 housed in the capsule support 7. At this point in the rotational travel of the cam 51, the cam follower 52 is in the down position, shown in Figure 12, and the needle 55 pierces the foil seal of the capsule 71. In this position, the injection chamber 100 is closed, but not yet clamped.

The second surface portions 61 b, 62b are intended for clamping the injection assembly 6. When the cam 51 and cam follower 52 have travelled beyond the first portions 61 a, 62a, the second portions 61 b, 62b cooperate so that the cam follower 52 presses firmly onto the capsule, which itself bears on the shoulder 70. The pressure exerted by the surface 54 being in contact with the upper surface of the capsule 71 makes the assembly of the cam follower 52 and the capsule 71 liquid-tight. Sealing is achieved by a rubber film covering the face 54. The clamping thus locks the capsule support 7 in the inserted position. In this position, the injection chamber 100 is closed and clamped. The liquid can be injected into the capsule 71 from the hose 2b, through the coupler 37 and then the needle 55. Alternatively, sealing could be achieved locally by a seal positioned on the periphery of the clamping surface 54 so as to cooperate with the rim of the capsule 71.

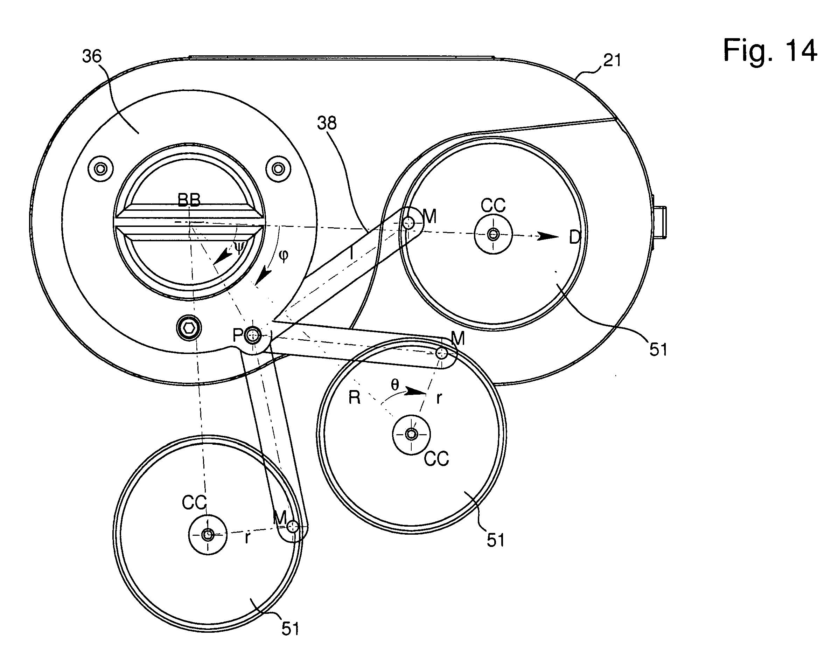

The operation of controlling the injection assembly 6 is shown in Figure 14. The head 21 appears (partly) in this figure in the retracted position, in the deployed position, and in an intermediate position. The axis BB is the rotation axis of the head 21. The rotation axis of the cam 51 is CC and the line passing through the axes BB and CC is D. The point of articulation of the lever 38 on the fixed ring 36 is P and the point of articulation of the same lever 38 on the cam 51 is M. The line passing through the point P and the axis BB makes an angle ψ with the line D, and the length of the lever 38 is I.

In the retracted position, the point M is located on the line D, closest to the axis BB. When the head is deployed by rotating it, the length I of the lever 38 being fixed, the point M moves about the axis CC so as to maintain this length. The cam 51 is thus rotated. An equation exists between the rotation angle θ of the cam 51 and the deployment angle ϕ of the head 21. This equation is complex and depends on the initial geometric parameters of the system, namely the angle ψ and the length I. The discussion will be limited to mentioning the fact that when the deployment angle ψ, of the head 21 increases, the rotation angle θ of the cam 51 increases up to a maximum value θₘₐₓ and then decreases. The value θₘₐₓ gives the maximum angular travel of the cam 51.

In practice, the injection assembly 6 is designed to be controlled so that the head 21 is deployed as far as an angle ϕ_{dep} corresponding to a rotation angle θ_{dep} of the cam 51 which is smaller than the angle θₘₐₓ. This is because it is undesirable for θ_{dep} to equal or approach the angle θₘₐₓ when opening the machine to prepare a drink, since beyond this angle the cam follower 52 rises again, and the clamping of the injection chamber 100 lessens. The initial parameters, namely the angle ψ and the length I, are chosen so as to have a large deployment angle of the head 21 and a large rotation angle θ_{dep} of the cam 51. This is because the head 21 must be greatly extended in order for the passage 10 to be well exposed and for a flask to be placed thereunder for the purpose of collecting the drink. In addition, if the rotation angle θ_{dep} of the cam 51 is small, the surfaces 61 a and 62a must be steeply inclined in order to make the cam follower 52 perform its entire travel, from the up position to the down position. In this case, the forces that are exerted on the parts are considerable, a high stress is required to open the head 21, and the surfaces 61, 62 are rapidly worn. It is therefore desirable to have a large rotation angle θ_{dep} of the cam 51.

It should also be noted that the clamping force applied by the cam 51 and cam follower 52 on the injection chamber 100 must be precisely controlled. This is because the chamber must be kept sealed during injection of the liquid with a certain pressure, otherwise there will be leaks and a risk of injuring the user. To achieve this, the clamping force must be sufficient. However, certain parts, such as the capsule holder 7, may be made of plastic, so that they may be damaged by an excessively high clamping force. The clamping of the injection chamber 100 must preferably be carefully calibrated.

However, the combined play due to the tolerances on the various parts of the injection assembly 6 may result in clamping values that deviate from the permitted limit values. The clamping of the injection chamber 100 depends directly on the translational travel of the cam follower 52, which itself depends on the rotation angle θ_{dep} of the cam 51. To compensate for the manufacturing and mounting play of the various parts, and thus optimize the clamping value of the injection chamber 100, the length I of the lever 38 is varied slightly, thereby having an effect on the rotation angle θ_{dep} of the cam 51. To do this, the lever 38 is pierced with an oblong hole via which it is fixed to the ring 36. Thanks to this movement, the useful length of the lever 38 may be adjusted.

The method of automatically controlling the injection assembly 6 thus presented is advantageous for two reasons. Firstly, it should be noted that the control formed by the lever 38 fixed to the ring 36 is extremely simple and compact. No part is deployed, even partially, to the outside of the casing 1, making it easier to stow and transport the machine. Secondly, the injection assembly 6 is controlled automatically since it actuated by deploying the head 21. The handling of the machine according to the invention is simplified since it is operational in a single movement. Furthermore, it is impossible to start the machine without having locked the capsule support 7, thereby reducing the risk of it being incorrectly manipulated.

A second embodiment of the injection assembly 6 is illustrated in Figures 15 to 19. This second embodiment differs, in its principle, from the previous one in that the closure control is not linked to the deployment of the head. Figure 15 is an exploded view of this manual injection assembly 6. As described previously, it comprises a generally cylindrical frame 50 in which are mounted, in succession, a cam 51 which can rotate, a cam follower 52 which can move in axial translation between an up position and a down position, and the sliding capsule holder 7. In the configuration shown, the injection assembly 6 also includes an intermediate piece 101, inserted between the cam follower 52 and the capsule holder 7. The intermediate piece 101 is fastened to the cam follower 52, by clip-fastening, clamping or adhesive bonding. It is covered, on its lower face, with a layer of an elastic sealing material and is sealingly penetrated by the hollow needle 55. It forms, with the capsule holder 7, the upper part and the lower part of the injection chamber 100, respectively. As a variant, the intermediate piece 101 is independent of the cam follower 52. In this case, it is mounted so as to move translationally inside the frame 50 and is itself provided with a hollow needle 55 intended for piercing the capsule and for injecting liquid thereinto, said needle communicating with a radial blind hole 56 provided for the arrival of the liquid. In a second variant of this configuration, the cam follower 52 merges with the intermediate piece 101 and itself forms the upper part of the injection chamber 100, as described with regard to Figure 10.

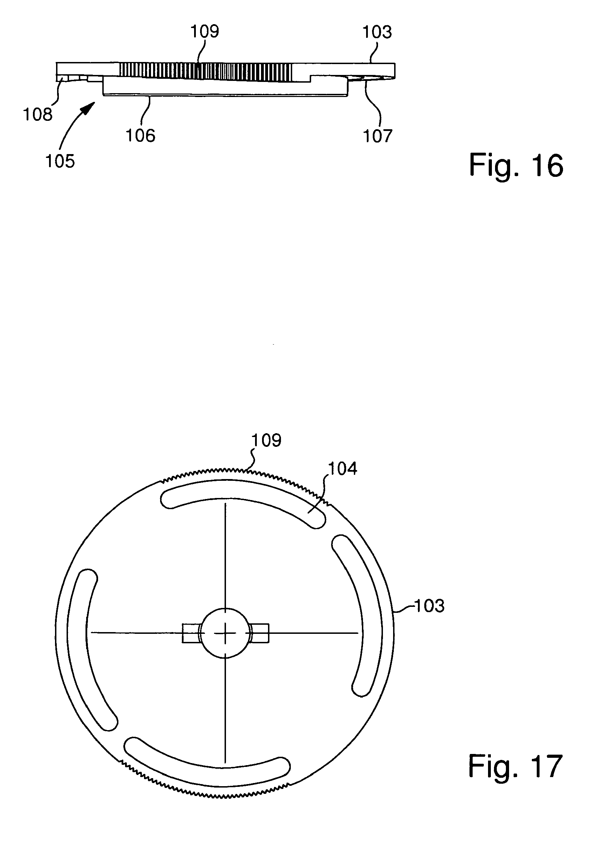

The second embodiment of the injection assembly 6 also includes, at the top of the frame 50, a rotary control knob 102, mounted so as to rotate as one with the cam 51. An adjustment piece 103, visible in Figures 16 and 17, is inserted between the control knob 102 and the cam 51. This piece 103 forms overall a disk provided with four oblong openings 104 angularly distributed on the periphery thereof. Its lower face 105 comprises a flat central portion 106, intended to cooperate with the upper face of the cam 51, and a peripheral portion 107 having slightly inclined segments extending angularly and forming bearing surfaces 108. The minimum number of these bearing surfaces 108 is two. Finally, the lateral face of the adjustment piece 103 is provided with two notched portions 109.

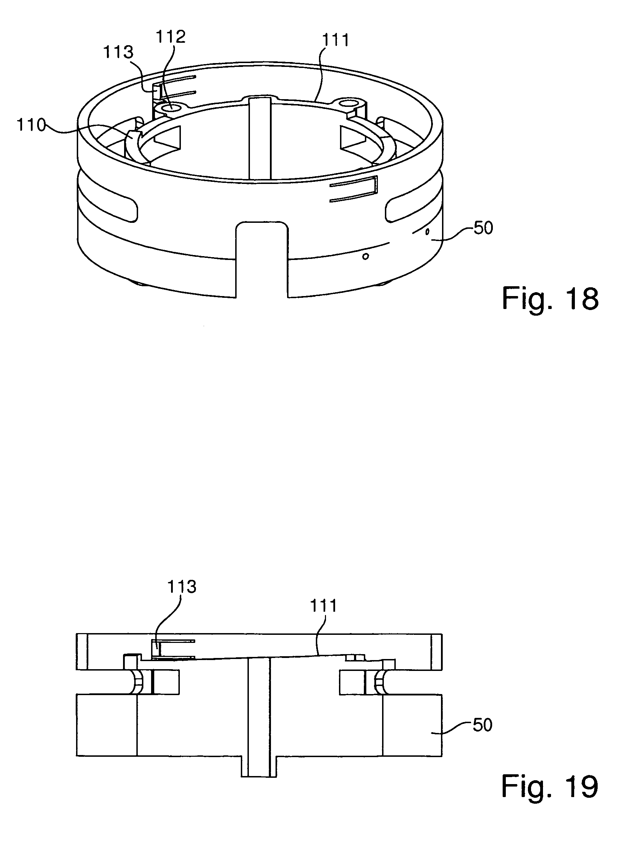

The frame 50 is shown in greater detail in Figures 18 and 19. It is provided with an inner shoulder 110 having two slightly inclined segments, forming counter-bearing surfaces 111, intended to cooperate with the bearing surfaces 108. The inner shoulder 110 is also provided with four threaded holes 112 designed for fixing the adjustment piece 103. Pawl means are provided, comprising two spurs 113 mounted elastically on the inner wall of the frame 50 and cooperating with the notched portions 109 in order to ensure that the piece 103 is angularly positioned in an incremental manner.

The adjustment piece 103 is placed, inside the frame 50, on the shoulder 110, the bearing surfaces 108 coming into contact with the counter-bearing surfaces 111. Because of the inclination of said bearing surfaces, the angular position of the adjustment piece 103 determines its axial position inside the frame 50, and in particular the position of its central flat portion 106. The latter is designed to serve as an abutment for the cam 51, thereby making it possible for the translational travel of the cam follower 52 to be finely regulated and for the injection chamber 100 to be optimally clamped. During the manual clamping operation using the control knob 102, the cam 51, which is mounted in the frame 50 with a slight translational play, bears on the central portion 106 of the adjustment piece 103. Depending on the height position of the adjustment piece 103, the translational travel of the cam follower 52 is greater or lesser and the force for clamping the injection chamber 100 is higher or lower. The adjustment piece is therefore positioned angularly so as to optimize the clamping force and is then fixed axially by four screws fitted, through the oblong holes 104, into the threaded holes 112.

It does not matter whether the machine for preparing a drink according to the invention is provided with an injection assembly 6 actuated so as to close by deploying the head, or by the use of an independent means.

Figures 1 to 14 show one embodiment of a machine provided with an injection assembly 6 actuated so as to close by deploying the injection head. As a variant, the manual injection assembly 6 may be mounted on the head 21 through an opening, through which only the control knob 102 projects, so as to be actuated by the user.

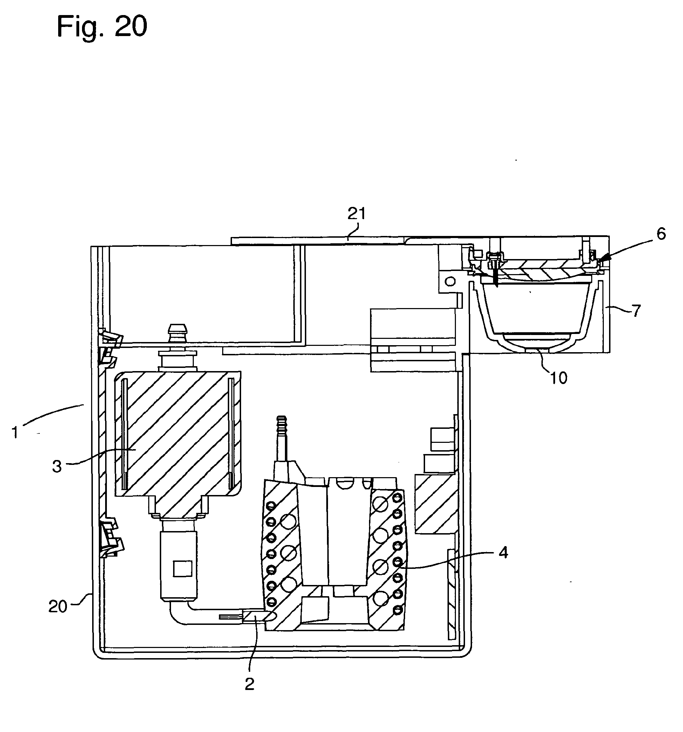

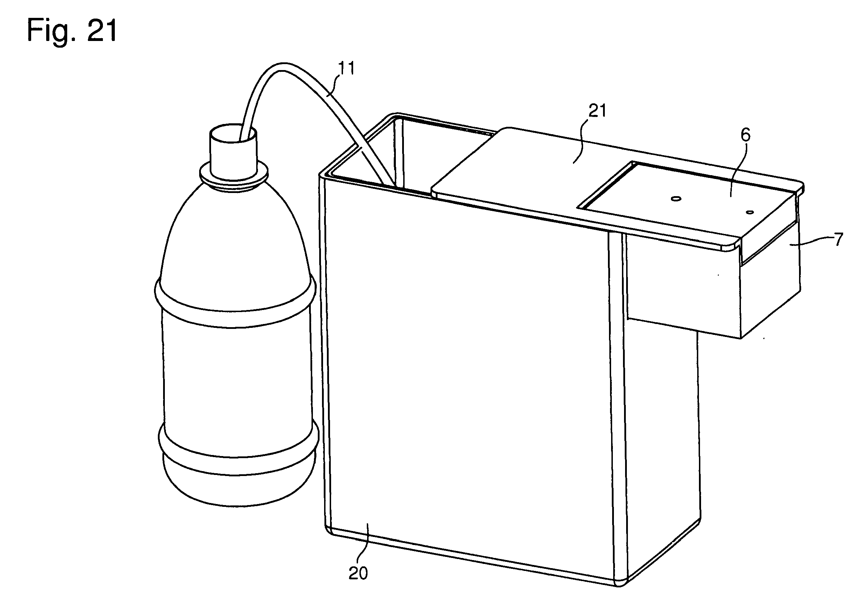

A third embodiment of the machine according to the invention will now be described as illustrated in Figures 20 and 21. In this embodiment, the machine for preparing a drink comprises a casing 1 formed from a body 20 and a head 21, the head being mounted so as to move on the body 20. This embodiment differs from the embodiment described with regard to Figures 1 to 19 in that the head 21 is mounted so as to slide on the body 20 in the manner of a drawer. The injection assembly 6 is unchanged and its control functions on a similar principle (not illustrated), namely a lever mounted so as to be articulated, at a first end, on a fixed portion of the body and, at a second end, on a rotary cam. By deploying the head 21, as previously, the cam rotates over an angular portion that depends on the initial geometric parameters of the mechanism. By determining the relationship between the rotation angle θ of the cam and the translational displacement of the head 21 it is possible to optimize these parameters so as to have a high angle θₘₐₓ.

Of course, the machine for preparing a drink according to the invention is not limited to the embodiments that have been described, it being possible for various modifications and simple variants to be envisaged by a person skilled in the art without departing from the scope of the invention as defined by the appended claims.

In particular, it should be noted that, in the above description, the invention assembly 6 includes a capsule support 7, but a person skilled in the art might choose to replace this with a sachet support or with a support for an unpackaged consumable product, without departing from the scope of the invention. In this case, the injection assembly would be similar to that described above except that the cam follower 52 would not have a piercing needle 55 but a simple passage for the liquid. Moreover, the lower face 54 would bear directly on the shoulder 70 in order to lock the support 7 and seal the injection assembly 6.

## Claims

1. Injection assembly (6) for the preparation of a drink from consumable ingredients and a liquid, comprising a frame (50) in which the following are mounted :
- an injection chamber (100), intended to accommodate a portion of ingredients, having a lower part (7) and an upper part (52, 101), at least one of said lower (7) and upper (52, 101) parts being mounted so as to move; and
- a cam (51) and a cam follower (52) which are mounted so as to move rotationally and translationally respectively, these cooperating via inclined surfaces (61, 62) in order to close said injection chamber (100),
- said upper part (52, 101) being mounted so as to move translationally inside said frame (50) and said cam (51) and said cam follower (52) being movably joined to said upper part (101) so as to be able to open and close said injection chamber (100),
**characterized in that** said inclined surfaces (61, 62) have highly inclined first portions (61 a, 62a) and slightly inclined second portions (61 b, 62b) which angularly extend said first portions (61 a, 62a).

2. Injection assembly according to Claim 1, **characterized in that** said upper part (52, 101) includes liquid injection means (55, 56, 37) having a radial inlet (37, 56) for the liquid to arrive radially relative to said upper part (52, 101).

3. Injection assembly according to Claims 1 or 2, **characterized in that** said upper part (101) is fastened to the cam follower (52).

4. Injection assembly according to Claim 3, **characterized in that** said upper part (101) is clip-fastened or screwed onto the cam follower (52).

5. Injection assembly according to Claim 1, **characterized in that** the geometries of the inclined surfaces (61, 62) are chosen so that, at the end of the first portions (61 a, 62a), said injection chamber (100) is closed.

6. Injection assembly according to Claim 1, **characterized in that** the geometries of the inclined surfaces (61, 62) are chosen so that said slightly inclined second portions (61 b, 62b) apply a clamping force on said injection chamber (100).

7. Injection assembly according to one of Claims 1 to 6, **characterized in that** it further includes an adjustment piece (103) for adjusting the clamping force of the injection chamber (100), said piece being mounted in said frame (50) ahead of said cam (51).

8. Injection assembly according to Claim 7, **characterized in that** said adjustment piece (103) includes means (108, 109, 113) for fine positioning inside said frame (50) relative to said cam (51).

9. Injection assembly according to Claim 8, **characterized in that** said frame (50) is generally cylindrical and **in that** said adjustment piece (103) forms overall a disk, said positioning means (108, 109, 113) being arranged so that the axial position of said adjustment piece (103) inside said frame (50) is finely varied when its angular position varies.

10. Injection assembly according to Claim 9 **characterized in that** said positioning means (108, 109) have slightly inclined bearing surfaces (108) intended to cooperate with slightly inclined counter-bearing surfaces (111) located in the frame (50).

11. Injection assembly according to one of Claims 1 to 10, **characterized in that** it further includes a control (102, 38) designed to rotate said cam (51).

12. Injection assembly according to Claim 11, **characterized in that** said control is a rotary knob (102) mounted so as to rotate as one with said cam (51), or said control is a lever (38) mounted so as to be articulated on said cam (51).

13. Injection assembly according to one of Claims 1 to 12, **characterized in that** said cam follower (52) is provided with a return spring.

14. Machine for preparing a drink, provided with an injection assembly (6) according to one of Claims 1 to 13.

## Patentansprüche

1. Einspritzanordnung (6) für die Zubereitung eines Getränks aus verzehrbaren Zutaten und einer Flüssigkeit, mit einem Rahmen (50), in welchem Folgendes angebracht ist:
- eine Einspritzkammer (100) zur Aufnahme eines Teils an Zutaten, die einen unteren Teil (7) und einen oberen Teil (52, 101) aufweist, wobei zumindest einer der unteren (7) und oberen (52, 101) Teile beweglich angebracht ist; und
- eine Nocke (51) und ein Nockenmitnehmer (52), welche derart angebracht sind, dass sie eine Dreh- bzw. Translationsbewegung ausführen, wobei diese über geneigte Flächen (61, 62) zusammenwirken, um die Einspritzkammer (100) zu verschließen,
- wobei der obere Teil (52, 101) derart angebracht ist, dass er innerhalb des Rahmens (50) eine Translationsbewegung ausführt und wobei die Nocke (51) und der Nockenmitnehmer (52) beweglich mit dem oberen Teil (101) verbunden sind, so dass sie die Einspritzkammer (100) öffnen und verschließen können,
**dadurch gekennzeichnet, dass** die geneigten Flächen (61, 62) stark geneigte erste Abschnitte (61 a, 62a) und leicht geneigte zweite Abschnitte (61 b, 62b) aufweisen, die sich in einem Winkel zu den ersten Abschnitten (61 a, 62a) erstrecken.

2. Einspritzanordnung gemäß Anspruch 1, **dadurch gekennzeichnet, dass** der obere Teil (52, 101) Flüssigkeitseinspritzeinrichtungen (55, 56, 37) mit einem radialen Einlass (37, 56) aufweist, so dass die Flüssigkeit radial in Bezug auf den oberen Teil (52, 101) eintreten kann.

3. Einspritzanordnung gemäß Anspruch 1 oder 2, **dadurch gekennzeichnet, dass** der obere Teil (101) an dem Nockenmitnehmer (52) befestigt ist.

4. Einspritzanordnung gemäß Anspruch 3, **dadurch gekennzeichnet, dass** der obere Teil (101) an den Nockenmitnehmer (52) geklemmt oder geschraubt ist.

5. Einspritzanordnung gemäß Anspruch 1, **dadurch gekennzeichnet, dass** die Geometrien der geneigten Flächen (61, 62) so gewählt sind, dass die Einspritzkammer (100) am Ende der ersten Abschnitte (61 a, 62a,) verschlossen ist.

6. Einspritzanordnung gemäß Anspruch 1, **dadurch gekennzeichnet, dass** die Geometrien der geneigten Flächen (61, 62) so gewählt sind, dass die leicht geneigten zweiten Abschnitte (61 b, 62b) eine Klemmkraft auf die Einspritzkammer (100) aufbringen.

7. Einspritzanordnung gemäß einem der Ansprüche 1 bis 6, **dadurch gekennzeichnet, dass** sie weiterhin ein Einstellteil (103) zum Einstellen der Klemmkraft der Einspritzkammer (100) aufweist, wobei das Teil in dem Rahmen (50) vor der Nocke (51) angebracht ist.

8. Einspritzanordnung gemäß Anspruch 7, **dadurch gekennzeichnet, dass** das Einstellteil (103) Einrichtungen (108, 109, 113) zur Feinpositionierung innerhalb des Rahmens (50) in Bezug auf die Nocke (51) aufweist.

9. Einspritzanordnung gemäß Anspruch 8, **dadurch gekennzeichnet, dass** der Rahmen (50) im allgemeinen zylindrisch ist und dadurch, dass das Einstellteil (103) insgesamt eine Scheibe bildet, wobei die Positioniereinrichtungen (108, 109, 113) derart angeordnet sind, dass die axiale Stellung des Einstellteils (103) innerhalb des Rahmens (50) leicht verändert wird, wenn sich seine Winkellage ändert.

10. Einspritzanordnung gemäß Anspruch 9, **dadurch gekennzeichnet, dass** die Positioniereinrichtungen (108, 109) leicht geneigte Auflageflächen (108) aufweisen, die mit leicht geneigten, in dem Rahmen (50) angebrachten Gegenauflageflächen (111) zusammenwirken sollen.

11. Einspritzanordnung gemäß einem der Ansprüche 1 bis 10, **dadurch gekennzeichnet, dass** sie weiterhin eine Steuerung (102, 38) zum Drehen der Nocke (51) aufweist.

12. Einspritzanordnung gemäß Anspruch 11, **dadurch gekennzeichnet, dass** die Steuerung aus einem derart angebrachten Drehknopf (102) besteht, dass dieser sich zusammen mit der Nocke (51) dreht, oder die Steuerung aus einem derart angebrachten Hebel (38) besteht, dass dieser gelenkig an der Nocke (51) angebracht ist.

13. Einspritzanordnung gemäß einem der Ansprüche 1 bis 12, **dadurch gekennzeichnet, dass** der Nockenmitnehmer (52) mit einer Rückholfeder versehen ist.

14. Maschine zur Zubereitung eines Getränks mit einer Einspritzanordnung (6) gemäß einem der Ansprüche 1 bis 13.

## Revendications

1. Ensemble d'injection (6) pour la préparation d'une boisson à partir d'ingrédients consommables et d'un liquide, comprenant un bâti (50) dans lequel ce qui suit est monté :
- une chambre d'injection (100), destinée à recevoir une partie des ingrédients, présentant une partie inférieure (7) et une partie supérieure (52, 101), au moins l'une desdites parties inférieure (7) et supérieure (52, 101) étant montée de manière à se déplacer ; et
- une came (51) et un galet de came (52) qui sont montés de manière à se déplacer respectivement en rotation et en translation, ceux-ci coopérant par l'intermédiaire de surfaces inclinées (61, 62) afin de fermer ladite chambre d'injection (100),
- ladite partie supérieure (52, 101) étant montée de manière à se déplacer en translation à l'intérieur dudit bâti (50) et ladite came (51) et ledit galet de came (52) étant reliés de façon mobile à ladite partie supérieure (101) de manière à être apte à ouvrir et fermer ladite chambre d'injection (100),
**caractérisé en ce que** lesdites surfaces inclinées (61, 62) présentent des premières parties (61a, 62a) très inclinées et des deuxièmes parties (61b, 62b) légèrement inclinées qui prolongent angulairement lesdites premières parties (61a, 62a).

2. Ensemble d'injection selon la revendication 1, **caractérisé en ce que** ladite partie supérieure (52, 101) comprend des moyens d'injection de liquide (55, 56, 37) présentant une entrée radiale (37, 56) pour que le liquide arrive de manière radiale par rapport à ladite partie supérieure (52, 101).

3. Ensemble d'injection selon les revendications 1 ou 2, **caractérisé en ce que** ladite partie supérieure (101) est fixée au galet de came (52).

4. Ensemble d'injection selon la revendication 3, **caractérisé en ce que** la partie supérieure (101) est encliquetée ou vissée sur le galet de came (52).

5. Ensemble d'injection selon la revendication 1, **caractérisé en ce que** les géométries des surfaces inclinées (61, 62) sont choisies de telle sorte que, à l'extrémité des premières portions (61a, 62a), ladite chambre d'injection (100) est fermée.

6. Ensemble d'injection selon la revendication 1, **caractérisé en ce que** les géométries des surfaces inclinées (61, 62) sont choisies de telle sorte que lesdites deuxièmes parties (61b, 62b) légèrement inclinées appliquent une force de serrage sur ladite chambre d'injection (100).

7. Ensemble d'injection selon l'une des revendications 1 à 6, **caractérisé en ce qu'**il comprend en outre une pièce de réglage (103) pour régler la force de serrage de la chambre d'injection (100), ladite pièce étant montée dans ledit bâti (50) devant ladite came (51).

8. Ensemble d'injection selon la revendication 7, **caractérisé en ce que** ladite pièce de réglage (103) comprend des moyens (108, 109, 113) pour un positionnement fin à l'intérieur dudit bâti (50) par rapport à ladite came (51).

9. Ensemble d'injection selon la revendication 8, **caractérisé en ce que** ledit bâti (50) est généralement cylindrique et **en ce que** ladite pièce de réglage (103) forme globalement un disque, lesdits moyens de positionnement (108, 109, 113) étant agencés de telle sorte que la position axiale de ladite pièce de réglage (103) à l'intérieur dudit bâti (50) est variée finement lorsque sa position angulaire varie.

10. Ensemble d'injection selon la revendication 9, **caractérisé en ce que** lesdits moyens de positionnement (108, 109) présentent des surfaces d'appui légèrement inclinées (108) destinées à coopérer avec des surfaces de contre-appui légèrement inclinées (111) se trouvant dans le bâti (50).

11. Ensemble d'injection selon l'une des revendications 1 à 10, **caractérisé en ce qu'**il comprend en outre une commande (102, 38) conçue pour faire tourner ladite came (51).

12. Ensemble d'injection selon la revendication 11, **caractérisé en ce que** ladite commande est un bouton rotatif (102) monté de manière à être en rotation de manière solidaire avec la came (51), ou ladite commande est un levier (38) monté de manière à être articulé sur ladite came (51).

13. Ensemble d'injection selon l'une des revendications 1 à 12, **caractérisé en ce que** ledit galet de came (52) est muni d'un ressort de rappel.

14. Machine pour la préparation d'une boisson, munie d'un ensemble d'injection (6) selon les revendications 1 à 13.
